# EUROPEAN PATENT APPLICATION

(11) **EP 3 012 651 A2**
(43) Date of publication of application: **27.04.2016**
(21) Application number: 15187029.2
(22) Date of filing: 28.09.2015
(51) Int. Cl.: G01S 3/801, G01S 5/20, G01S 5/18

(54) **AN ACOUSTIC DETECTION SYSTEM**

(30) Priority: 06.10.2014 GB 201417583; 15.08.2015 GB 201514557
(71) Applicant: Reece Innovation Centre Limited, Newcastle upon Tyne NE15 6UX (GB)
(72) Inventor: MARTIN, James, Whitley Bay Tyne and Wear NE26 3PG (GB); TAMADONI, Reza, Durham, Durham DH1 1AN (GB); GRIFFITHS, Luke, Gateshead Tyne and Wear NE9 5NQ (GB); WILKINSON, Alexander, Newcastle Tyne and Wear NE2 1HP (GB); KIANI, Saeed, Newcastle upon Tyne NE3 5ED (GB)
(74) Representative: Bryers LLP

(57) **Abstract**

An acoustic detection system is provided for determining the source of an acoustic wavefield. The system comprises multiple acoustic sensors, the sensors being configured to provide multiple different components of a vector from the source of the acoustic wavefield to the system.

## Description

The present invention relates generally to an acoustic detection system and particularly to the measurement of propagating wavefields.

The detection, characterisation and location of acoustic sources are very valuable. An obvious example using geophones fixed to the earth to measure either velocity or acceleration is the detection of elastic signals associated with earthquakes. The epicentre of the earthquake can be determined from measurements made at a number of different locations around the planet.

Measurements of propagating acoustic wavefield made either in air (gas) or water (liquid) are normally made using omnidirectional acoustic sensors: omnidirectional microphones for air and omnidirectional hydrophones for water. Omnidirectional sensors can measure the time at which the acoustic signal arrives at the sensor, but they have no sense of direction. Arrays of omnidirectional sensors are often used to provide direction information, where the elements are spatially separated from each other in known locations. The differences in a signal's arrival time as its wave sweeps across the array can be used to determine the direction in which the acoustic signal is travelling. A number of arrays that are spatially separated from one another along a baseline can provide directional information from which the source location of the acoustic signal can be located by triangulation.

The present invention seeks to provide improvements in or relating to acoustic detection.

According to an aspect of the present invention there is provided an acoustic detection system for measuring a propagating wavefield, comprising one or more acoustic sensors, the or each sensor providing a bi-directional measurement component.

The current invention relates, for example, to the measurement of a 1-component, 2-component or 3-component vector of the acoustic wavefield from which arrival time and direction of propagation of the acoustics signals can be determined.

For example a I-dimensional measurement might be for monitoring acoustic signals in a conduit (such as a pipe, tunnel or culvert) where the sensor axis is aligned with the geometry of the conduit. A 2-dimensional measurement could be used to make measurements for acoustic propagation in a plane. A 3-dimensional measurement could be used to locate the source of an acoustic wavefield.

The present invention may relate to the use of I, 2 or 3-component measurements in air (gas) and/or water (liquid).

A further aspect provides an acoustic detection system for determining the source of an acoustic wavefield, comprising multiple acoustic sensors, the sensors being configured to provide multiple different components of a vector from the source of the acoustic wavefield to the system.

In some aspects and embodiments the present invention describes the utility of multi-dimensional pressure gradient measurements in water to measure the vector of a propagating acoustic, sonic or ultrasonic wavefield.

In some aspects and embodiments the current invention is also sensitive to the directional response of the sensor, which is critical if the vector of the acoustic signal is to be measured accurately.

In some aspects and embodiments the present invention relates to the use of specially designed and configured acoustic sensors that are co-located to the same position and that measure both the arrival time and direction of travel of an acoustic signal.

In a further aspect the present invention provides an acoustic detection system for measuring a propagating wavefield, comprising an array of a plurality of acoustic sensors, each of the sensors providing a bi-directional measurement component.

A further aspect provides an acoustic detection system for providing a three-dimensional acoustic wavefield measurement, comprising an array of sensor arranged in three different dimensions for measuring multiple respective components of the arrival time and direction of travel of an acoustic signal.

A further aspect provides an acoustic detection system for determining the source of an acoustic wavefield, comprising a plurality of sensors configured to generate bi-directional acoustic measurements representing multiple components of a vector from the source of the acoustic wavefield.

A further aspect provides an acoustic detection system for determining the source of an acoustic wavefield, comprising a multiple acoustic sensors each of which provides a bi-directional acoustic measurement, the sensors being configured to provide multiple respective components of a vector from the source of the acoustic wavefield to the system.

A further aspect provides a detection system for determining the relative position of a source of an acoustic wavefield, the system comprising a plurality of bi-directional acoustic sensors each configured to generate acoustic measurements representing multiple components of a position vector to the source of the acoustic wavefield.

In some embodiments multiple sensors are provided and are disposed in an array such that the principal axes of directionality of the sensors are orthogonal to one another.

Alternatively or additionally multiple sensors are provided and the sensors are disposed in an array such that the principal axes of directionality of the sensors are oriented substantially 120deg relative to one another and elevated by a preselected angle to the horizontal.

A plurality of sensors may be disposed atop one another.

A plurality of sensors may provided and the sensitivity of the sensors may be matched.

The or at least one of the sensors may comprise two or more sub-sensors. The sensitivity of the sub-sensors may be matched.

The present invention also provides an acoustic detection system comprising a plurality of sensors, the acoustic response of each of the sensors being matched.

Sensors and/or sub-sensors may be sensitivity matched by selection and/or by manufacture and/or by calibration.

The calibration may be a mathematical calibration. The mathematical calibration may be a scalar constant calibration

The mathematical calibration may be corrected for amplitude and/or phase. In some embodiments a constant amplitude correction and a constant phase rotation may be applied across the whole of a signal. In other embodiments the corrections may be different for each frequency of the sensor's response. Frequency dependent amplitude and phase corrections may be made (also known as matching filters).

The sensitivity matching may be better than 5%, better than 1% or better than 0.1 %.

The or each sensor may comprise two or more sub-sensors facing in different directions.

The or each sensor may comprise two sub-sensors facing in different directions. The sub-sensors may face in generally opposite directions ("back-to-back").

The sensitivity of the sub-sensors may be matched.

The system may include means for altering polar directivity, such as a horn or the like.

The system may further comprise means for directional filtering of one or more of the acoustic responses. The direction filtering may be accomplished by polarisation filter and/or wavefield separation.

The system is capable of providing a one-component measurement and/or a two-component measurement and/or a three-component measurement.

In some embodiments two or more principal orthogonal measurements may be taken, and an additional measurement may be taken to provide redundancy and/or calibration functionality.

The system may further comprise a further component measuring sensor the vector of which can also be calculated from the remaining sensors, whereby the further sensor can be used as a check for the remaining sensors.

The system may be capable of providing additional measurements to provide redundancy and/or calibration functionality to the principal orthogonal measurements. For instance, in a 3-dimension/component system, sensors in, for example, a Galperin configuration could be provided, with an additional bi-directional measurement pointing vertically upward; or a Cartesian configuration with an additional bi-directional measurement pointing to the apex of the three (or two) orthogonal components. This additional 4th component's response can be calculated from a mathematical combination of measurements from the other measurements and compared with the actual measurement from the 4th component. This would be a calibration test. If one of the orthogonal components failed, then its data could be calculated from the remaining orthogonal measurements and the additional 4th (or 3rd for a 2-D system) bi-directional sensor measurement, thus providing redundancy.

There could be as many additional measurements as required, to provide even more calibration capacity and/or redundancy.

The response from each sensor may comprise, consist of or include a generally cardioid response.

One or more the sensors may be composed of sub-sensor elements which can be combined to provide a bi-directional measurement for that sensor dimension.

The system may include sensor components arranged in a Cartesian array; this may be a rotated Cartesian array.

The system may include sensor components arranged in a Galperin array.

The orthogonal configurations may be an arbitrary orientation with respect to the horizontal plane, with matrix rotation used to transform into a preferred, desired vector orientation.

A plurality of sensors may be provided and and arranged in a vertical stack.

At least some of the sensors may be microphones. At least some of the sensors may be hydrophones. Microphone measures the pressure in air or in a gas, while a hydrophone measures pressure in water or a liquid (or emulsion or slurry or mud). The bi-directional response of either a microphone or a hydrophone measures the pressure gradient.

In one embodiment bi-directional microphones (microphones with a figure-of-eight polar pattern) are used for each component measurement. In a further embodiment a pair of opposed cardioid response microphones is used.

The system may further comprise a location determining means, such as a GPS module.

The system may further comprise an inclinometer.

The system may further comprise a magnetometer.

The system may further comprise a gyroscope.

The system may further comprise means for dynamically determining position and orientation of the sensor array so as to enable correction to a defined reference frame.

The system may further comprise additional sensing means, which may include visual and/or temperature and/or vibration and/or infra-red imaging and/or chemical detection.

The acoustic measurement/s may be used to trigger the additional sensing means.

For instance, acoustic monitoring of an intruder with CCTV monitoring of their movements - record and focus in on their conversations or simply record the sounds of them breaking in to provide more evidence. The acoustic measurement could be used as a trigger to activate other measurement methods or to provide an alarm to focus security attention on a specific CCTV feed. Therefore there could be other sensing methods other than visual linked with the acoustic.

The present invention also provides an acoustic source detection array comprising or including one or more systems as claimed in any preceding claim which are spatially separated from each other along a baseline.

The present invention also provides a vector measurement arrangement comprising or including one or more systems as claimed in any preceding claim.

The present invention also provides a method for sound source localisation using an acoustic detection system including an array of bi-directional acoustic sensors, the method comprising: generating multiple acoustic measurements using respective ones of the sensors in response to an acoustic wavefield originating from the sound source; and using the acoustic measurements to generate data representing multiple components of a position vector to the sound source.

Generating the data may include using measurements relating to time difference of arrival of sound from the source at respective ones of the multiple sensors.

The present invention also provides a computer program product, comprising a computer usable medium having computer readable program code embodied therein, said computer readable program code adapted to be executed to implement a method for sound source localisation as described herein.

Examples of some applications for the measurement systems of the present invention include military, sewer and culvert surveying and monitoring, tunnel surveying and monitoring, and acoustic leak detection and location.

Snipers are a major danger to military forces. The location of the sniper's position from the acoustic signals: explosion of the charge within the gun to fire the projectile and the Mach wave from the projectile as it passes through the air, can be used to determine the location of the sniper so that counter measures can be applied.

Acoustic signals associated with artillery, mortar bombs, aircraft, helicopters, drones and mini-drones can also be used to map their positions and trajectories.

Conduits, culverts, pipes, sewers, drains and tunnels that pass beneath a road, track or railway line (route of transport) can be packed with explosives with which the route can be disrupted, materiel damaged and destroyed, and personnel either killed or injured.

Conduits, culverts, pipes, tunnels, drains and especially sewers, can become either totally or partially blocked due to cave-ins, disruption by tree roots or simply the build-up of solid components of the sewerage.

Conduits and pipes in complex industrial processing systems are prone to leaks. The acoustic signals associated with these leaks can be located and remedial action taken.

The methods described in this patent memo describe means of detecting and determining the location of acoustic signals associated with events. Once these signals have been characterised and located remedial actions can be taken. Means of detecting and locating the source of an acoustic emission are described for measurements in air (gas) and water (liquid).

Further embodiments are disclosed in the dependent claims attached hereto.

Different aspects and embodiments of the invention may be used separately or together.

Further particular and preferred aspects of the present invention are set out in the accompanying independent and dependent claims.

Features of the dependent claims may be combined with the features of the independent claims as appropriate, and in combination other than those explicitly set out in the claims.

The present invention will now be more particularly described, by way of example, with reference to the accompanying drawings, in which:
Figure 1 illustrates a 2 dimensional vector measurement;
Figure 2 illustrates a 3-dimensional vector Cartesian measurement and equivalent spherical co-ordinate system;
Figure 3 is a schematic orientation of the standard Cartesian X, Y , Z co-ordinates and the U, V, W measurements made with the Galperin configuration;
Figure 4 shows a Cartesian 3-dimensional sensor (10) formed in accordance with the present invention and configured into a vertical stack of sensor elements: X (bottom), Y (middle) and Z (top) components;
Figure 5 shows vertical stack (110) of sensor elements formed in accordance with the present invention and orientated into a Galperin configuration: U (bottom), V (top) and W (middle);
Figure 6 illustrates the cardioid response as calculated by combining simultaneously recorded omnidirectional and bi-directional responses;
Figure 7 illustrates triangulation of acoustic source origin from multiple measurements made at positions A and B separated by a baseline S;
Figures 8 to 11 show a sensor body formed in accordance with an embodiment of the present invention; and
Figures 12 to 14 show a sensor body formed according to a further embodiment.

The present invention relates to either 1-dimensional, 2-dimensional or 3-dimensional measurement of an acoustic wavefield propagating either in air (gas) or water (liquid).

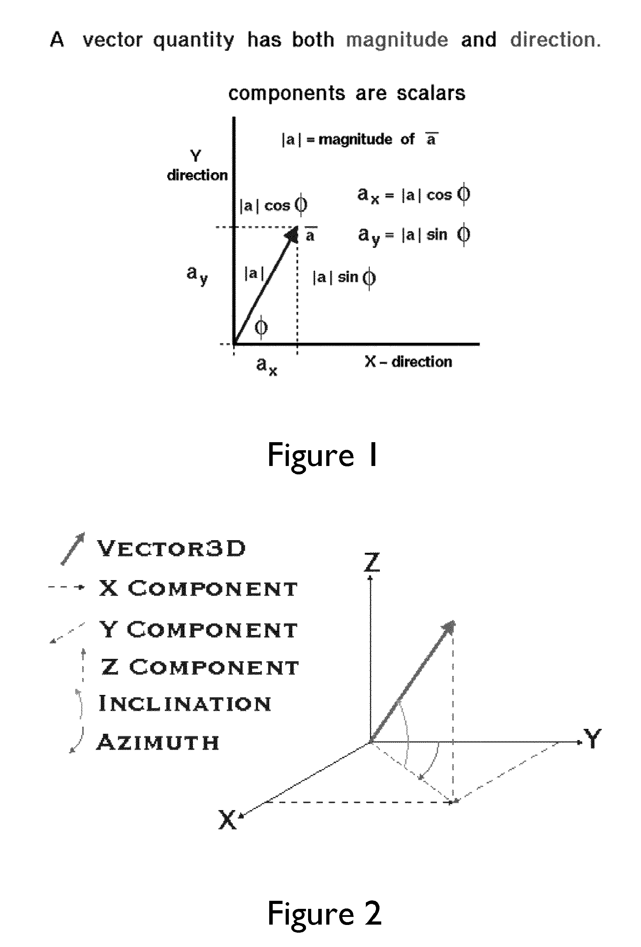

If only the azimuth and range to the source location of the acoustic signal are required, then a 2-dimensional vector measurement is necessary - figure 1.

If the azimuth, inclination and range to the source location of the acoustic signal are to be determined, then a 3-dimensional vector measurement of the acoustic wavefield is necessary - figure 2.

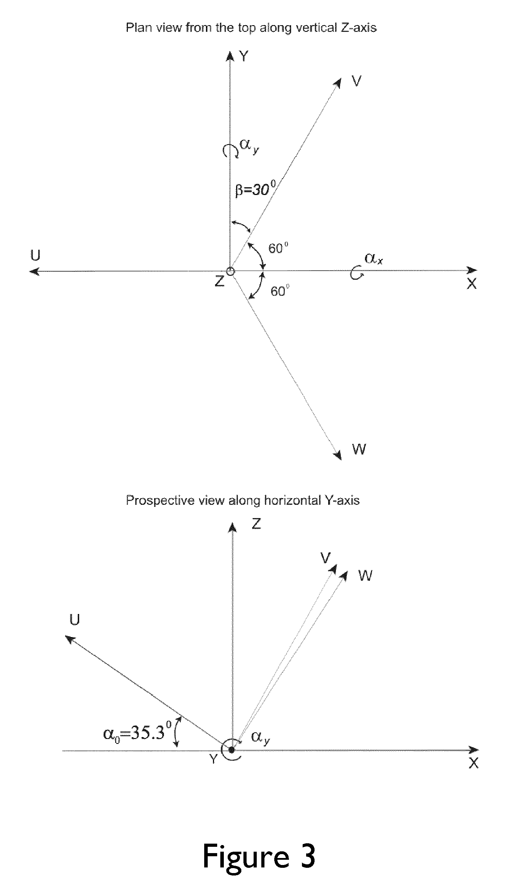

An alternative 3-dimensional sensor configuration known as the Galperin configuration (Galperin (1974)), that was developed for application to geophones, can also be applied to bi-directional microphones and hydrophones. A major advantage is that the gravitational field is experienced equally by each sensor in the 3-dimensional Galperin configuration -figure 3.

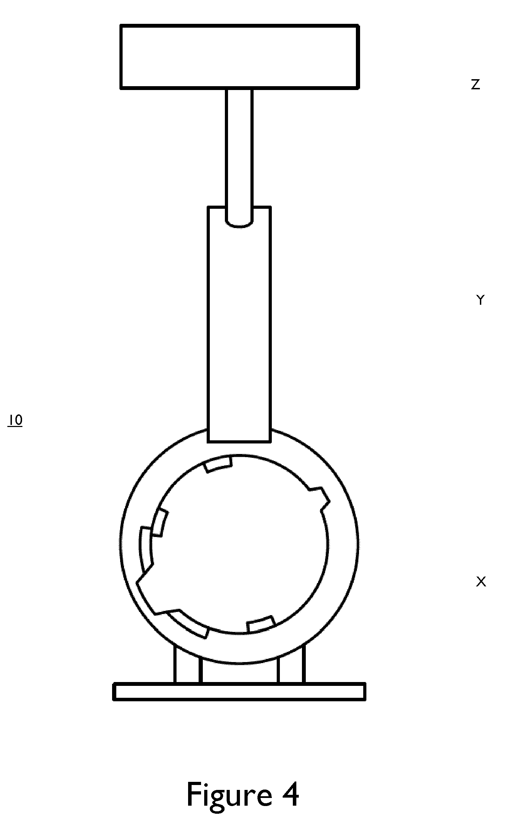

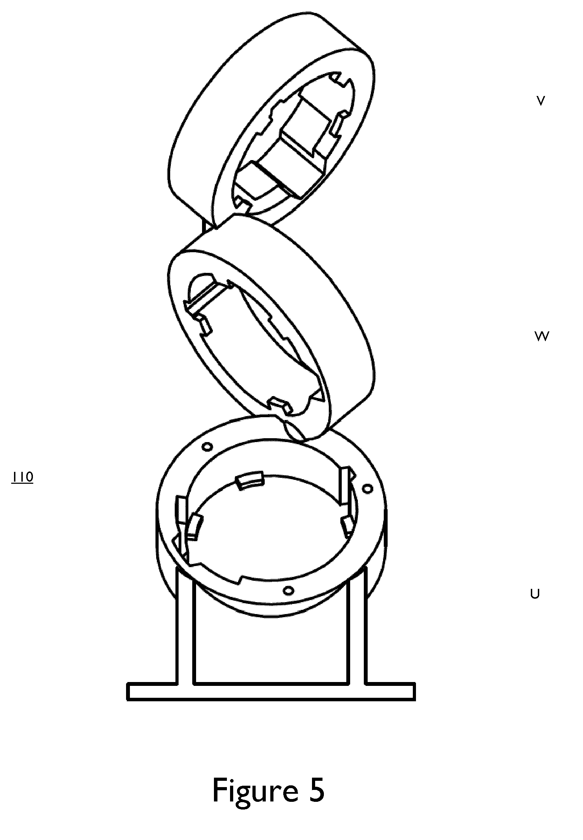

The Cartesian and Galperin configurations can be constructed using many spatial arrangements of sensor elements. The sensor elements can, for instance, be stacked one above the other to provide a vertical distribution - figures 4 and 5. In these embodiments the sensors may be bi-directional microphones, for example comprising two back-to-back microphones each capable of giving a generally cardioid response.

In air the sensor of choice will be a microphone, while in water to sensor of choice will be a hydrophone. The term sensor will henceforth be used to mean either microphone or hydrophone.

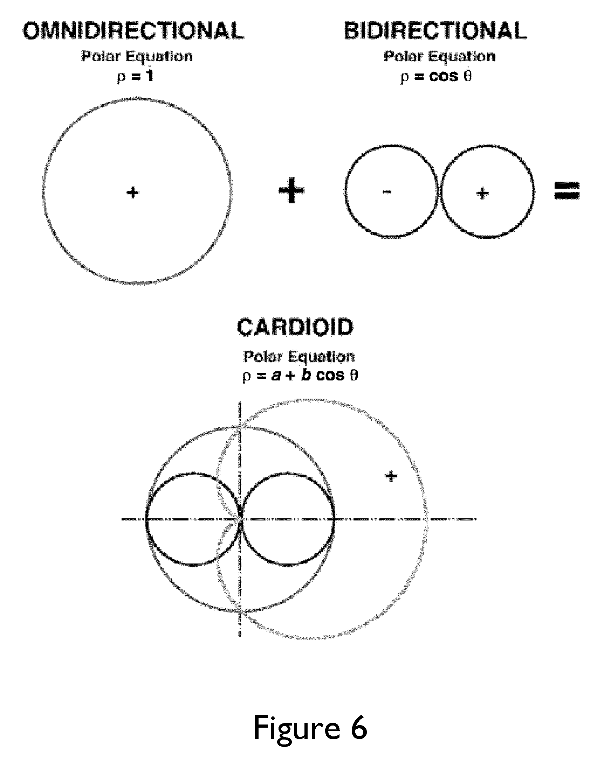

Each sensor is designed to record a bi-directional response. These sensors could directly measure the bi-directional response of an acoustic wavefield or they could be composed of sub-sensor elements that when combined provide a bi-directional measurement. Figure 6 shows how omnidirectional and bidirectional microphone responses can be constructed from cardioid microphone sensor elements. The present invention uses this approach to the construction of omnidirectional and bi-directional hydrophones for use in water.

The construction of omnidirectional and bi-directional sensors from cardioid elements requires those elements to be extremely well matched in terms of their sensitivity, directional and frequency responses. Matched cardioid elements can be found, for example, by characterising the elements very carefully and then combining only those elements with well matched characteristics.

An alternative approach is to characterise the cardioid sensor elements through calibration testing and then apply sensitivity, directivity and frequency corrections to each element in software so that their output characteristics are matched before their data are combined to construct omnidirectional and bidirectional sensors.

The 1, 2 or 3-component sensor can be augmented by the addition of at least one additional bidirectional sensor aligned in such a way that its response is a vector sum of the orthogonal components measured by either the Cartesian or Galperin configurations. This additional sensor or sensors can provide a check that the calibration approaches applied to the orthogonal measurements are stable, because a vector sum of the orthogonal components should match the measurement from the additional sensor. Similarly, if one of the orthogonal sensors fails, then its component can be calculated from the remaining orthogonal sensor measurements and the additional non-orthogonal measurement.

Knowledge of the orientation of the measured vector is critical if the directions that can be calculated from its data are to be related to a reference frame that can be projected onto a map. The 2 or 3-dimensional sensor's measurement vector can be orientated using calibration acoustic pings activated from known positions. The measured vector and then be rotated to a desired reference frame by vector rotation. Alternatively, the sensors orientation can be surveyed. If the sensor is mounted on a vehicle, then its instantaneous vector orientation needs to be measured using a combination of inclinometers, accelerometers, magnetometers and gyroscopes. These auxiliary measurements provide roll, pitch and yaw information, so that the vector of the acoustic sensor measurements can be rotated to a desired orientation.

While the 2 or 3-dimensional acoustic sensors provide both timing and direction information relating to the incident acoustic wavefield, multiple 2 or 3-dimensional sensors can be distributed in either an areal (2D) or a spatial (3D) array with an inter-sensor separation of less than I m, so that arrival time differences can also be measured that will improve the accuracy with which the acoustic wavefield can be characterised.

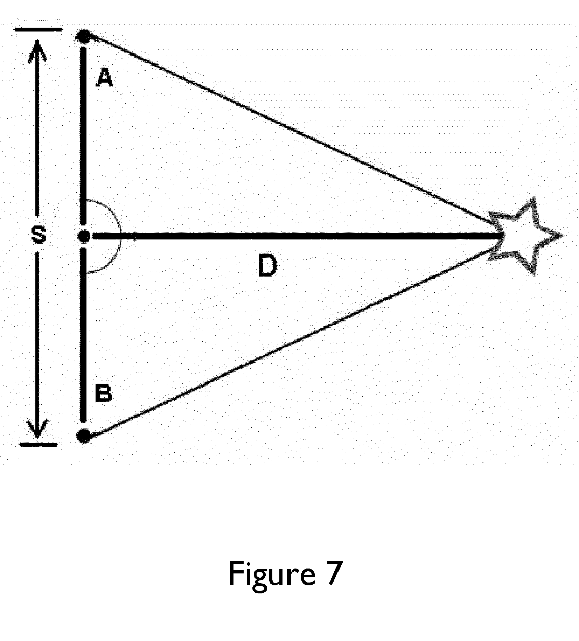

Multiple 2 or 3-dimensional acoustic sensors can also be located with some distance between measurement locations, greater than 1m, along a baseline at positions A and B, and separated by a distance S so that their combined data can be triangulated to locate the source of the incident acoustic signal and its range D - figure 7.

The 2 or 3-dimensional measurements that form part of this invention require only two positions to be occupied for accurate acoustic source origins to be identified using the method of triangulation, because the arrival time and propagation direction of the acoustic wavefield are measured at each sensor location. The use of scalar measurements as described in the prior art require three locations to be occupied by sensors to determine from which side of the principal baseline the acoustic signal originates when using the triangulation method.

The cardioid response of a sensor can be altered through either the use of horns or by forming a curved sensor element. The objective of this part of the invention is to alter the directivity response and have each sensor sub-element measure one half of the bi-directional response as shown in figure 6 (instead of a cardioid response), so that each sub-element is only sensitive to the direction towards which it is facing and its directivity response varies as the cosine of the angle of incidence. The desired bi-directional sensor response can then be constructed by simple combination of sensor elements that are orientated 180° from one another.

While the standard bi-directional response with a directivity proportional to the cosine of the angle of incidence is ideal, so long as its directivity response has a single lobe in each hemisphere and its directivity response is known, then multi-component measurements can be combined to describe the vector of the incident acoustic wavefield. For instance, the sensor could have a directional sensitivity proportional to the cosine² of the angle of incidence.

Once the 2 or 3-dimensional measurement is available, then polarisation filters can be applied to the data to enhance the sensitivity of the measurement in required directions and to reduce or nullify the sensitivity of the measurement in undesired directions.

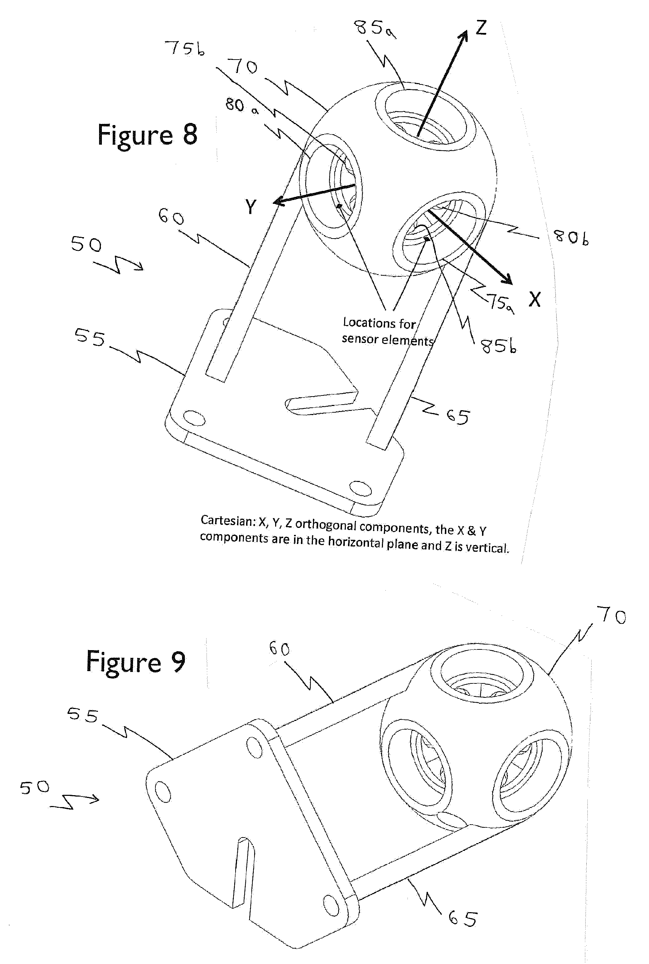

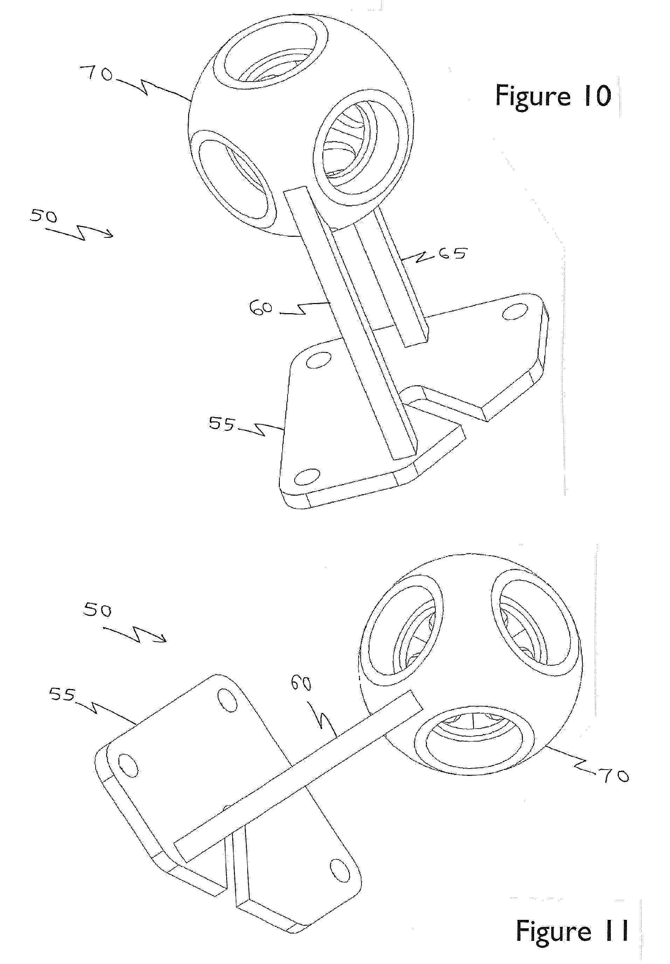

Figures 8 to 11 show an acoustic detector generally indicated 50.

The detector 50 comprises a base 55, a pair of support legs 60, 65 and a sensor head 70.

The head 70 is generally spherical and is hollow. The shell has six sensor apertures 75a, 75b, 80a, 80b, 85a, 85b, being three pairs (the members of each pair being opposite each other) positioned to define three orthogonal components: X, Y, Z in a Cartesian array.

Acoustic sensors (not shown) can be mounted in each of the apertures. In one embodiment, for example, cardioid response microphones (with well matched responses) are used. This means that for each of the three components X, Y, Z there are two cardioid microphones on opposite faces of the head. In use this provides two opposite cardioid responses for each component. Subtracting one cardioid response from its opposite response (i.e. within the component pair) provides a bi-directional figure of eight response.

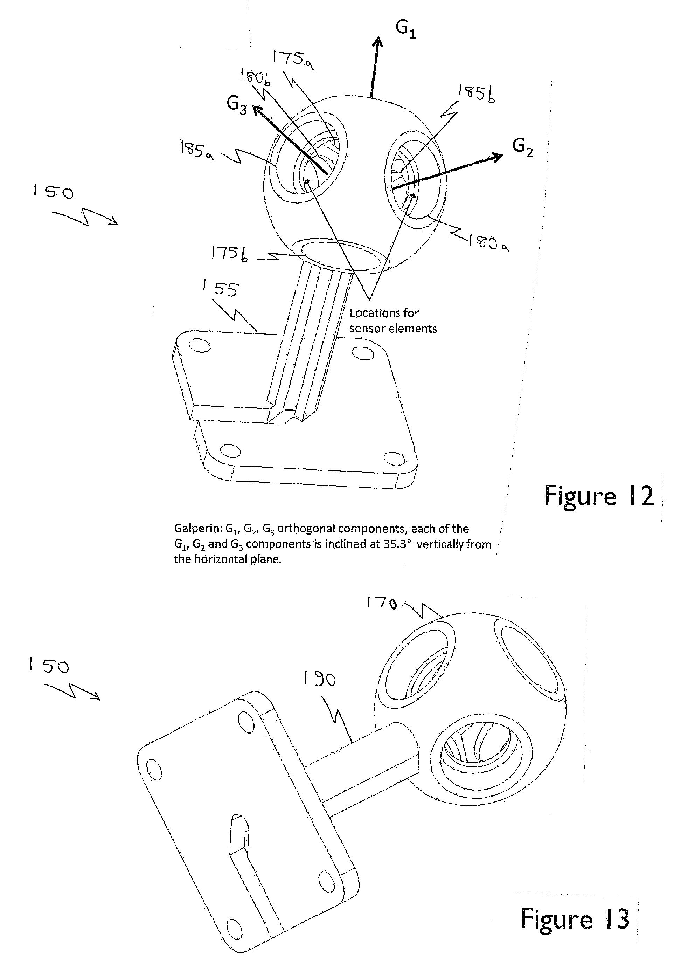

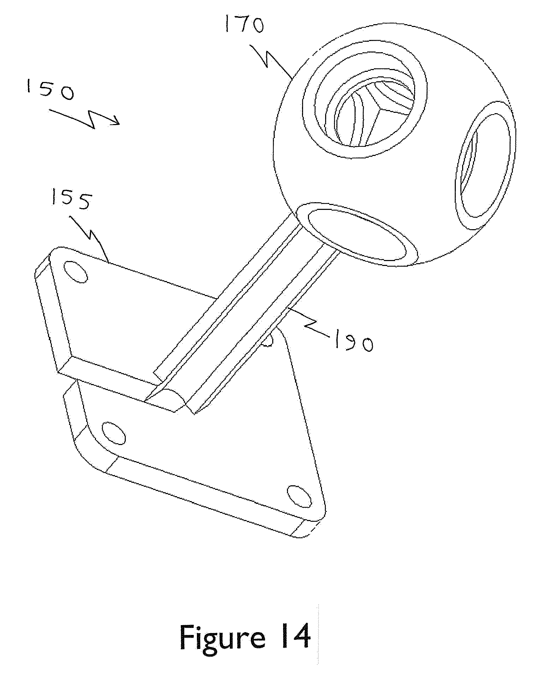

Figures 12 to 14 show a detector 150 formed according to a further embodiment.

The detector 150 is similar to the detector 50 and includes a spherical head 170 with six apertures 175a, 175b, 180a, 180b, 185a, 185b arranged in three pairs; members of each pair being opposite each other and the three pairs being orthogonal to each other. In this embodiment the head is mounted on a U-section stem 190.

In this embodiment the orthogonal components G₁, G₂, G₃ are arranged in a Galperin array, in use providing for a three-component acoustic wavefield measurement.

Specific applications of the I 2 or 3-dimensional vector measurement of the acoustic wavefield are numerous. Some applications include:
1) Gunshot detection: the location of the origin of a gunshot can help military and law enforcement agencies take remedial action. The acoustic signal associated with the firing of the weapon and the Mach wave emitted as the projectile passes through either the air or water can be measured using the 2 or 3-diemsional acoustic sensor and their data combined to provide an accurate location of the source of the shot. A single 2 or 3-dimensional measurement is needed to provide the shot origin location, as the speed and trajectory of the projectile can be combined with the later arrival of the muzzle sound to trace the acoustic information back to its origin.
   A priori information can also be used to augment directional information from the 2 or 3-dimensional sensor. For instance, 3D knowledge of the local terrain can be used such that the location of the shot's origin can be determined from where the directional information from the multi-component acoustic sensor bisects the hard surface as defined by the 3D 'map'.
   The military applications can be extended to seeking the origin or artillery rounds, mortar bombs, rocket propelled grenades and other ordinance.
   The location and trajectory of aircraft, helicopters, drones and mini-drones can also be mapped and tracked.
   The 2 or 3-dimensional acoustic sensors can be deployed with active acoustic sources to detect partial or complete blockages in conduits that could be explosive mines or improvised explosive devices.
   The information determined from these measurements can be recorded for analysis and interpreted information provided to personnel, and also fed into counter measures systems.
   The military applications of the invented technology can be extended to general security applications. 2 or 3-dimensional acoustic sensors can be deployed to monitor perimeters, road, rail, track or footpath approaches or infrastructure to detect intrusion. The acoustic systems can be co-ordinated with visual or other sensing systems to provide more accurate alerts. The acoustic systems can be deployed in buildings, bases and other areas to detect intruders and to track normal traffic.
2) The novel acoustic sensors described in this invention can be combined with directional filters, such as polarisation filters, to monitor conversations and other acoustic signals emanating from different locations within a room or area. The multi-dimensional acoustic signal can be monitored and then filtered into separate propagation directions even though they were originally recorded simultaneously. Applications span security to acoustic monitoring of hospital patients.
3) Many chemical, nuclear, oil and gas refining, engine rooms and power plants incorporate conduits that transport materials, fluids and gases within their structure. These materials are often dangerous, poisonous, at high temperatures or high pressures. While existing systems are designed to measure the status of these plants, the use of 2 or 3-dimensional acoustic sensors external to the plant can be deployed to efficiently detect deviations from the stable acoustic response of the plant or to detect leaks. Further investigations and remedial actions can be planned once such events are detected.
4) A 2 or 3-dimensional acoustic system can be deployed at either the sea-floor or within the water column to monitor the acoustic signals and detect leaks from sub-sea oil and gas field completions.
5) The 2 or 3-dimensional acoustic sensors outlined in this invention can be used in downhole acoustic, sonic and ultrasonic logging tools used in the oil and gas industries to log and monitor wells and their near wellbore vicinities. Such logging tools usually make measurements using scalar, omnidirectional sensors. Some logging tools deploy rings of (typically 8) omnidirectional sensors and then measure arrival time delays between opposite pairs of sensors to characterise any azimuthal directive anisotropic behaviour associated with acoustic or elastic wavefield propagation in the near-wellbore formation. Anisotropy in acoustic or elastic wavefield propagation times is indicative of stress fields in the rock or the principal orientations of fracture sets. An alternative application is to use acoustic, sonic or ultrasonic measurements to characterise the cement bond between the formation and the metal casing within the well. These measurements are critical in preventing fluid communication between geological layers within the reservoir and its overburden and to prevent liquids and gas finding a path to the surface where they can cause environmental damage.
   The present invention can provide much higher angular resolution of anisotropic wavefield propagation characterisation. The volume of the 2 or 3-dimensional acoustic sensors is also much smaller (particularly the diameter) than conventional acoustic logging tools based on rings of omnidirectional sensors. Acoustic logging tools utilising the novel 2 or 3-dimensional sensors can be designed with smaller diameters, making them useful for deployment in smaller diameter oil and gas wells.
6) Natural phenomena such a landslides, mudslides and volcanic eruptions can be monitored and specific acoustic events located using the 2 or 3-dimensional acoustic sensors.
7) The 2 or 3-dimensional acoustic sensors can be deployed in conduits such as sewers to monitor acoustic signals as well as to record data from active acoustic sources to detect partial or complete blockages.
8) Location of acoustic signals can be extended to locating individuals who may be lost or injured, but who can cause acoustic signals to be emitted: (voice, whistle etc.); such as mountain rescue incidents. Individuals may be trapped in collapsed buildings or mines, and acoustic signals may help locate them.

Acoustic emission from marine vessels to help locate other vessels or individuals. Locating acoustic signals in fog can be very effective. The acoustic location system would be useful for small vessels where radar would be both expensive or bulky.

Further uses may include:

| | Applications: | | |
|---|---|---|---|
| | Goals: Save time/money/lives using the applications listed below: | | |
| | Match other systems but cheaper such as RADAR/infra-red/sonar and other locating systems. | | |
| Type: | | Gunshot detection also Missile and Mortar detection. | |
| Locating (Tracking) | People | Mountain Rescue | detect and triangulate cries for help |
| | | | emergency whistles, nice loud high frequency |
| | | In Fires/smoke | detect and triangulate cries for help |
| | | | emergency whistles, nice loud high frequency |
| | | | Peoples breathing? |
| | | | Lead people to exits-based on beacons activated by the fire alarm? |
| | | In Mines/Buried | detect people underground in collapsed mines |
| | | | Listen for signature sounds of mine collapse-early warning |
| | | Detect Fires ignition -based on sound | |
| | | Hospitals, Monitor or | breathing |
| | | track patients | footsteps/signature special slippers |
| | | | Give patients an acoustic beacon. |
| | Aircraft | Track aircraft based on sound - 3D localising of engine sound | |
| | | Black Box Locator-Hydrophone array | |
| | Ships | Trackships based on sound -3D localising | |
| | | engine sound, useful as a cheaper alternative to RADAR for small craft, hobby boats etc. | |
| | | Work in Fog or other low visibility situations (such as smoke - see fire above) | |
| | Cars | Use in cars to detect and warn of the approach of emergency vehicles | |
| | | -A loud siren is easy to detect and isolate, probably use a cheaper 2D sensor and array. | |
| | | -safetyfeature, big market | |
| | | Mount on traffic lights to change them to Red on approach of Emergency vehicles. | |
| | submarines | Sonar, already well developed. | |
| | Wildlife | In Air | Birdsong, animal calls |
| | | | Bat detection |
| | | | Bird-strike protection for Helicopters |
| | | Underwater | Whale monitoring |
| | | | Dolphin detection |
| | | | Sharkdetection |
| Monitoring | Infrastructure | Bridges, Tunnels or Mines | |
| | Railway | Listen to the tracks | |
| | | Unmanned railwayJunctions | |
| | | Remote line protection-landslides etc. | |
| | Farms | crop protection, livestock protection against theft | |
| | | monitor gates - animal noises etc. | |
| | | Livestock monitoring | |
| | Offices | Tracking/occupancy/noise cancellation | |
| | Factory/Plant | Monitor Equipment-localise bad vibrations/worn/misaligned bearings. | |
| | Engine Rooms | listen to whole plant/system simultaneously | |
| | Nuclear Facilities | Plant monitoring and security | |
| | The Earth (Warning Systems) | Avalanches -creakingsnow gives an early warning. | |
| | | Floods or Tidal surges | |
| | | Landslides | On land-what frequency? |
| | | Seismic activity | infrasonic waves give warning |
| | | under the sea | tremor sensors, underwater landslide detectors |
| | | | -tsunami detection |
| | | Volcanoes | tremors lava etc. |
| | Space/High altitude | 3 component cosmic ray detector | |
| Data logging (3D array in a 'pig') | Water Mains | detect leaks | |
| | Sewers | listen for high flow rates - somehow detect blockages | |
| | | detect cave-ins | |
| | Gas Pipes | listen for leaks | |
| | | | |
| | Oils wells | Scan the bore hole for leaks | |
| Security | Border/Perimeter Protection | Detect selected noises - track them | |
| | | Footfalls, Engine/Wheel/Tracked vehicles | |
| | | Gates opening and closing noises | |
| | | Person detection - people smuggling etc. | |
| | House/Garden protection | | Link to home PCor 'Internet of Things' |
| | Pre-gunshot noises - cocking of a rifle etc. | | school protection etc. |
| | Voice monitoring | | Track people based on the content of speech - keywords, Stress levels in voices |
| | | | Airports, Shoppingcentres and train stations. |

A further embodiment (not shown) relates to directional sensing of acoustic events and in particular to a sniper detection system. A four component microphone is provided that delivers highly accurate position information relating to the source of a sound. Detection of the muzzle blast and the shock wave enables trajectory information to be established in support of accurately determining the location of the acoustic source.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention as defined by the appended claims and their equivalents.

## Claims

1. An acoustic detection system for determining the source of an acoustic wavefield, comprising multiple acoustic sensors, the sensors being configured to provide multiple different components of a vector from the source of the acoustic wavefield to the system.

2. A system as claimed in claim I, comprising an array of sensors arranged in three different dimensions for measuring three components of the wavefield.

3. A system as claimed in claim 1 or claim 2, in which the system includes sensor components arranged in: a Cartesian array; a rotated Cartesian array; or a Galperin array.

4. A detection system as claimed in any preceding claim, wherein a plurality of sensors are disposed atop one another.

5. A system as claimed in any of claims 1 to 3, in which the sensors are provided on a generally spherical sensor body.

6. A system as claimed in any preceding claim, in which at least one of the sensors comprises two or more sub-sensors.

7. A system as claimed in any preceding claim, in which the sensitivity of the sensors and/or the sub-sensors is matched.

8. A system as claimed in any preceding claim, in which the sensors and/or sub-sensors are sensitivity matched by selection and/or by manufacture and/or by calibration.

9. A system as claimed in claim 9 or claim 10, in which the sensitivity matching is better than 5%, better than 1%, or better than 0.1 %.

10. A system as claimed in any preceding claim, in which each sensor comprises a bi-directional response sensor.

11. A system as claimed in any preceding claim, in which each sensor comprises a pair of opposed cardioid response sub-sensors, each pair providing a component measurement.

12. A system as claimed in any preceding claim, in which each sensor is: a microphone; a hydrophone; or a geophone.

13. A system as claimed in any preceding claim, in which a measurement is taken to provide redundancy and/or calibration functionality.

14. A system as claimed in any preceding claim, further comprising a further component measuring sensor the vector of which can also be calculated from the remaining sensors, whereby the further sensor can be used as a check for the remaining sensors.

15. A method for sound source localisation using an acoustic detection system including an array of acoustic sensors, the method comprising:
generating acoustic measurements using respective sensors in response to an acoustic wavefield originating from the sound source;
using the acoustic measurements to generate data representing multiple respective components of a position vector to the sound source.
